# EUROPEAN PATENT APPLICATION

(11) **EP 3 287 995 A1**
(43) Date of publication of application: **28.02.2018**
(21) Application number: 17187748.3
(22) Date of filing: 24.08.2017
(51) Int. Cl.: G07G 1/00

(54) **INFORMATION PROCESSING DEVICE THAT INCLUDES PERIPHERAL DEVICE**

(30) Priority: 25.08.2016 JP 2016164552
(71) Applicant: Toshiba TEC Kabushiki Kaisha, Tokyo 141-8562 (JP)
(72) Inventor: SUZUKI, Katsuyuki, Shinagawa-ku, Tokyo 141-8562 (JP)
(74) Representative: Takeuchi, Maya

(57) **Abstract**

An information processing device according to an embodiment includes a main processing device with a placement base and a power feeding unit. A peripheral device communicates with the main device and is shaped to be mounted on the placement base in a plurality of orientations. The peripheral device includes a power receiving unit that receives power from the power feeding unit when the peripheral device is mounted on the placement base in each of the plurality of orientations.

## Description

### FIELD

Embodiments described herein relate generally to an information processing device that includes a peripheral device.

### BACKGROUND

A sales data processing device such as a POS terminal device includes a printer that prints a receipt. An integrated sales data processing device and a sales data processing device may include a plurality of devices that function in cooperation with one another.

The integrated sales data processing device may include the above-described printer, which is incorporated into one housing along with a control unit, a keyboard, and so forth. The printer of this type generally issues a receipt to an operator of the sales data processing device. That is, a paper ejection opening for a receipt is provided, for example, on the same side as the side where the keyboard operated by the operator is disposed.

On the other hand, in some of the sales data processing devices configured with a plurality of devices that function in cooperation with one another, a peripheral device (such as a printer) may be connected to, for example, a hub that connects individual units or a principal device (a main device).

Sometimes, there is a need to issue a receipt to a customer in some sales situations. For example, an operator and a customer may face each other with a showcase or counter being placed between them, according to one sales situation.

However, because the printer of the integrated sales data processing device is provided with a paper ejection opening for a receipt on the side where the operator stands, the printer of the integrated sales data processing device cannot meet the above-described need.

By contrast, the printer provided separately from the main processing device or individual units can meet the above-described need by being positioned so that the paper ejection opening faces the side where the customer stands. However, since the printer is provided separately from the main processing device or individual units, a space on the showcase or counter tends to become untidy and most of the space is occupied by the individual units or connecting cables of the sales data processing device, which is not desirable. That is, there is room for improvement to meet the need in a better way.

The above-described problem also arises in any information processing devices including the sales data processing device in which a main processing device and a peripheral device are used as a set.

To solve the above-described problem, there is provided an information processing device comprising: a main processing device including a placement base and a power feeding unit; and a peripheral device in communication with the main device and shaped to be mounted on the placement base in a plurality of orientations, the peripheral device including a power receiving unit configured to receive power from the power feeding unit when the peripheral device is mounted on the placement base in each of the plurality of orientations.

Preferably, the power feeding unit feeds power to the power receiving unit in a noncontact manner when the peripheral device is mounted on the placement base in each of the plurality of orientations.

Preferably, the main processing device functions as a sales data processing device in cooperation with the peripheral device.

Preferably, the peripheral device is a printer that prints a receipt.

Preferably, the printer includes a paper ejection opening through which the receipt is ejected, and
the plurality of orientations include a first orientation in which the paper ejection opening faces an operator of the sales data processing device and a second orientation in which the paper ejection opening faces a customer on a side of the sales data processing device opposite the operator.

Preferably, the power receiving unit is centrally positioned, with respect to a longitudinal direction, in the peripheral device.

Preferably, the peripheral device includes a projection on a bottom surface thereof, and the main processing device includes a plurality of depressions, each being shaped to receive the projection to position the peripheral device in one of the plurality of orientations when the peripheral device is mounted on the placement base.

Preferably, the plurality of orientations includes a first orientation in which a front surface of the peripheral device faces an operator of the main processing device and a second orientation in which the front surface faces a customer on a side of the sales data processing device opposite the operator.

The present invention also relates to an information processing device comprising: a sales data processing device including a placement base; and a printer controlled by the sales data processing device to print a receipt and shaped to be mounted on the placement base in a plurality of orientations, the printer including a paper ejection opening through which the receipt is ejected, wherein the plurality of orientations include a first orientation in which the paper ejection opening faces an operator of the sales data processing device and a second orientation in which the paper ejection opening faces a customer on a side of the sales data processing device opposite the operator.

Preferably, the sales data processing device further comprises a power feeding unit, and the printer includes a power receiving unit configured to receive power from the power feeding unit when the peripheral device is mounted on the placement base in each of the plurality of orientations.

Preferably, the power feeding unit feeds power to the power receiving unit in a noncontact manner when the printer is mounted on the placement base in each of the plurality of orientations.

Preferably, the power receiving unit is centrally positioned, with respect to a longitudinal direction, in the printer.

Preferably, the printer includes a projection on a bottom surface thereof, and the sales data processing device includes a plurality of depressions, each being shaped to receive the projection to position the printer in one of the plurality of orientations when the printer is mounted on the placement base.

Preferably, the plurality of orientations includes a third orientation in which the paper ejection opening faces to the right of an operator of the sales data processing device.

Preferably, the plurality of orientations includes a third orientation in which the paper ejection opening faces to the left of an operator of the sales data processing device.
The present invention further relates to an information processing device comprising: a main processing device including a placement base; and a peripheral device controlled by the main processing device to print a receipt and shaped to be mounted on the placement base in a plurality of orientations, wherein the plurality of orientations include a first orientation in which a front face of the peripheral device faces an operator of the main processing device and a second orientation in which the front face of the peripheral device does not face the operator.

Preferably, in the second orientation, the front face of the peripheral device faces a customer on a side of the main processing device opposite the operator.

Preferably, in the second orientation, the front face of the peripheral device faces a direction to one of the left and the right of the operator of the main processing device.

Preferably, the main processing device includes a power feeding unit, and the peripheral device includes a power receiving unit configured to receive power from the power feeding unit when the peripheral device is mounted on the placement base in each of the plurality of orientations.

Preferably, the power feeding unit feeds power to the power receiving unit in a noncontact manner when the peripheral device is mounted on the placement base in each of the plurality of orientations.

### DESCRIPTION OF THE DRAWINGS

Fig. 1 is a perspective view depicting the external configuration of a POS terminal device according to an embodiment, viewed from the front side thereof;
Fig. 2 is a perspective view depicting the external configuration of the POS terminal device, viewed from the back side thereof;
Fig. 3A is a right side view schematically depicting the structure of the POS terminal device in a state in which a paper ejection opening of a printer faces a side where an operator stands;
Fig. 3B is a right side view schematically depicting the structure of the POS terminal device in a state in which the paper ejection opening of the printer faces a side where a customer stands;
Fig. 4A is a right side view schematically depicting a structure of a POS terminal device according to a second embodiment, in a state in which the paper ejection opening of the printer faces the side where the operator stands; and
Fig. 4B is a longitudinal right side view schematically depicting the structure of the POS terminal device according to the second embodiment, in a state in which the paper ejection opening of the printer faces the side where the customer stands.

### DETAILED DESCRIPTION

Embodiments enhance the usability of an information processing device that includes a main processing device and a peripheral device while increasing flexibility in the position of the peripheral device with respect to the main processing device.

An information processing device according to an embodiment includes a main processing device with a placement base and a power feeding unit. A peripheral device communicates with the main device and is shaped to be mounted on the placement base in a plurality of orientations. The peripheral device includes a power receiving unit that receives power from the power feeding unit when the peripheral device is mounted on the placement base in each of the plurality of orientations.

### (First Embodiment)

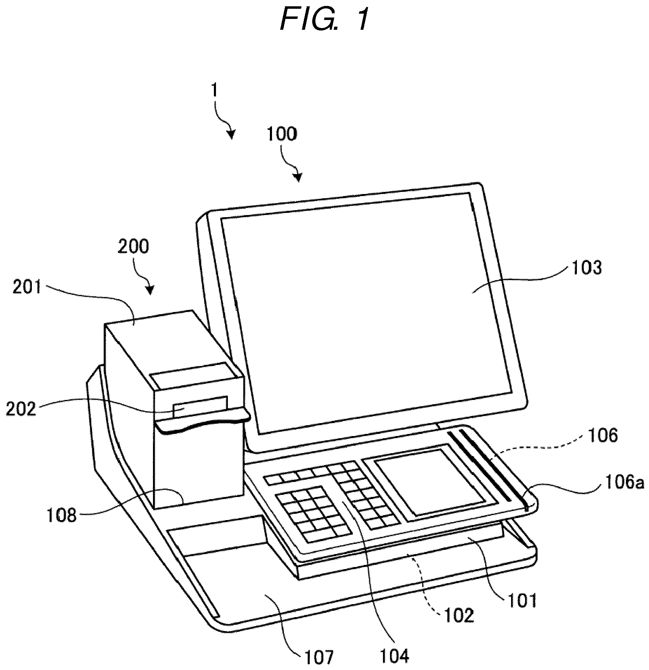

Embodiments will be described with reference to the drawings. Fig. 1 is a perspective view depicting the external configuration of a POS terminal device 1 of an embodiment, viewed from the front side thereof.

The POS terminal device 1 is a type of sales data processing device that performs data processing on merchandise to be sold. Moreover, the sales data processing device is an example of an information processing device.

The POS terminal device 1 is used along with, for example, a drawer or cash register in which money is stored. The POS terminal device 1 includes a main body unit 100 and a printer 200. The printer 200 is detachably attached to the main body unit 100. The main body unit 100 is an example of a main processing device of the POS terminal device 1. The main body unit 100 functions as the sales data processing device in cooperation with the printer 200. The printer 200 is an example of a peripheral device that communicates with the main processing device.

The main body unit 100 includes a housing 101, a control unit 102, a monitor 103, a keyboard 104, a card reader 106, an examination tray 107, and a placement base 108.

The housing 101 serves as a base of the main body unit 100 and houses the control unit 102. Moreover, the housing 101 supports the keyboard 104 on the front side on the top face thereof and supports the monitor 103 at the back of the keyboard 104.

The monitor 103 displays various kinds of information and operating states for an operator of the POS terminal device 1. The keyboard 104 receives an operation from the operator.

The card reader 106 reads information from a magnetic card, such as a credit card, which is inserted and slid into a groove 106a provided on the right end of the keyboard 104.

The control unit 102 sends and receives signals to and from the above-described individual units (e.g., the monitor 103, the keyboard 104, and the card reader 106) and controls the individual units.

The examination tray 107 is a flat portion which is a top face of the housing 101 and is provided on the front side of the keyboard 104. The examination tray 107 is used by, for example, the operator to check money received from a customer by putting the money thereon.

The placement base 108 is a base on which the printer 200 is to be placed. On the placement base 108, the printer 200 can be mounted so as to face forward or backward.

The printer 200 includes a housing 201 and a paper ejection opening 202. The housing 201 houses a roll of receipt paper, a printing head for printing a receipt, and so forth. The paper ejection opening 202 is an opening provided in the housing 201. The paper ejection opening 202 ejects a printed receipt.

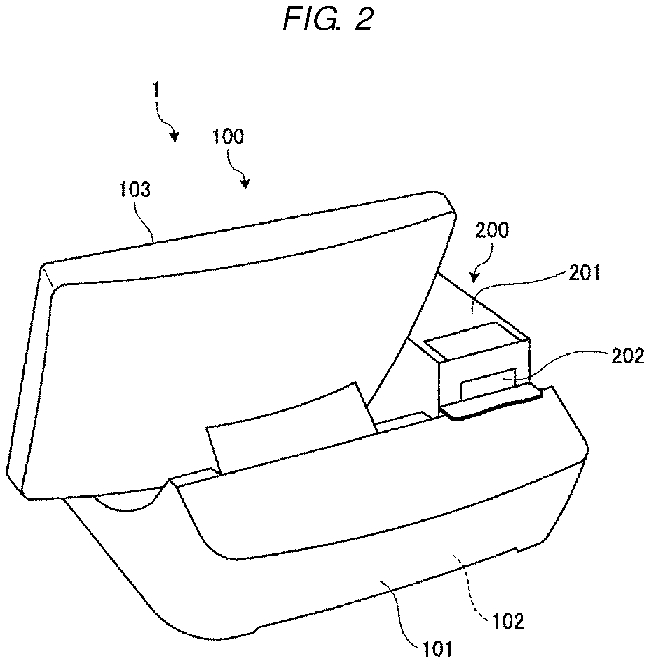

Fig. 2 is a perspective view depicting the external configuration of the POS terminal device 1, viewed from the back side thereof. Fig. 2 illustrates a state in which the printer 200 is positioned facing a direction opposite to the direction in Fig. 1. That is, in the state depicted in Fig. 1, the printer 200 directs the paper ejection opening 202 toward the front side of the main body unit 100, and in the state depicted in Fig. 2, the printer 200 directs the paper ejection opening 202 toward the back side of the main body unit 100. As a result, the receipt is ejected toward the customer who faces the operator.

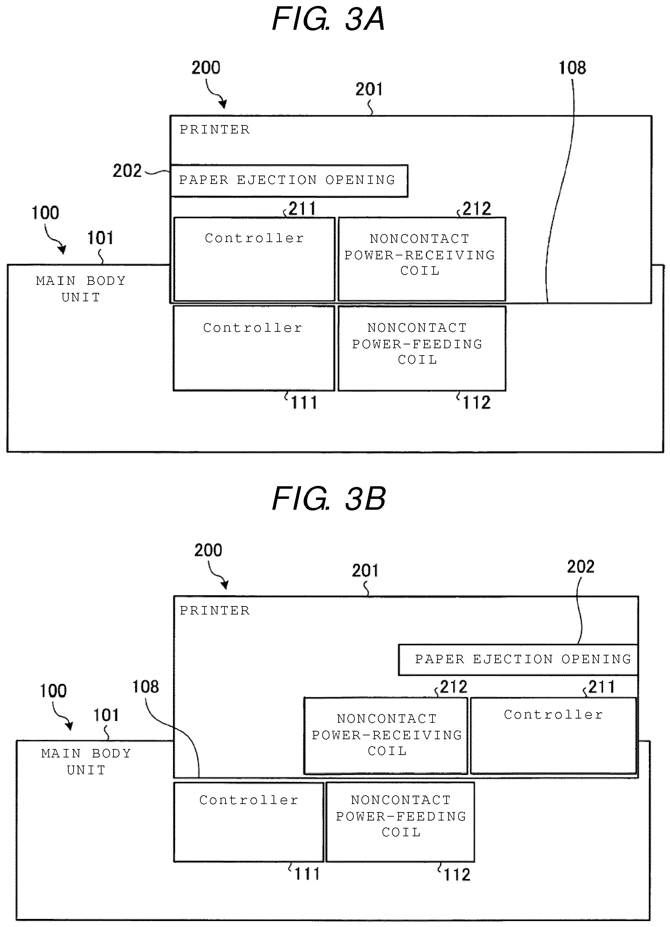

Fig. 3A is a right side view schematically depicting the structure of the POS terminal device 1 in a state in which the paper ejection opening 202 of the printer 200 faces the side where the operator stands. Fig. 3B is a right side view schematically depicting the structure of the POS terminal device 1 in a state in which the paper ejection opening 202 of the printer 200 faces the side where the customer stands.

The placement base 108 allows the printer 200 to be placed thereon such that a state in which the printer 200 faces forward, that is, the front surface of the printer 200 coincides with the front surface of the main body unit 100. The front face of the printer 200 can be changed to a state in which the printer 200 faces backward, that is, the front surface of the printer 200 coincides with the back surface of the main body unit 100, and vice versa. The placement base 108 is a depression provided in the top surface of the housing 101 of the main body unit 100 and has a shape corresponding to the shape of the bottom surface of the housing 201 of the printer 200. Each of the shapes of the placement base 108 and the bottom surface of the printer 200 is symmetric with respect to a line between the front half and the back half thereof so that the printer 200 can be placed on the placement base 108 in both a state in which the printer 200 faces forward and a state in which the printer 200 faces backward. The printer 200 is positioned and fixed by being placed on the placement base 108 so as to be fitted therein. The match between the shape of the placement base 108 and the shape of the bottom surface of the printer 200 functions as a positioning structure that defines the position of the printer 200.

The main body unit 100 further includes, in the housing 101, a controller 111 (for example, a hardware controller) and a noncontact power-feeding coil 112. The controller 111 and the noncontact power-feeding coil 112 are an example of a power feeding unit that feeds power to the printer 200. Moreover, the printer 200 further includes a controller 211 (for example, a hardware controller) and a noncontact power-receiving coil 212. The controller 211 and the noncontact power-receiving coil 212 are an example of a power receiving unit that receives power from the power feeding unit.

The noncontact power-receiving coil 212 is positioned near the bottom surface of the housing 201 in a central part in a longitudinal direction. Similarly, the noncontact power-feeding coil 112 is positioned in a central part of the placement base 108 in a longitudinal direction. As a result, irrespective of the direction in which the printer 200 on the placement base 108 faces, the noncontact power-feeding coil 112 and the noncontact power-receiving coil 212 are in close proximity to each other.

The controller 211 is positioned near the noncontact power-receiving coil 212. The controller 211 controls power receiving of the printer 200. The controller 211 receives power transmitted from the noncontact power-feeding coil 112 via the noncontact power-receiving coil 212.

The controller 111 is positioned near the noncontact power-feeding coil 112. The controller 111 controls feeding of power to the printer 200. The controller 111 feeds power which is transmitted to the noncontact power-receiving coil 212 via the noncontact power-feeding coil 112.

In such a configuration, the POS terminal device 1 is used in a state in which the printer 200 is placed on the placement base 108 in an orientation that is suitable for a desired sales pattern. For instance, in general, the printer 200 may be positioned with the paper ejection opening 202 directed toward the same side (the front side of the main body unit 100) that the monitor 103 is directed. Moreover, in order to allow the customer to directly receive the receipt issued by the printer 200 in a sales pattern-for example, in which the operator and the customer face each other with a showcase or counter being placed between-the printer 200 is positioned with the paper ejection opening 202 directed toward the back side of the monitor 103.

In either case, power can be fed to the printer 200 from the main body unit 100 because the noncontact power-feeding coil 112 and the noncontact power-receiving coil 212 face each other in either orientation of the printer 200 described above.

As described above, since the POS terminal device 1 of the present embodiment can change the orientation of the printer 200 in accordance with situations such as a changed sales pattern, the POS terminal device 1 can make the paper ejection opening 202 eject a receipt toward the customer, for example, which makes the POS terminal device 1 easy to use.

In the above-described embodiment, the printer 200 is used in a state in which the printer 200 faces forward or backward, but an embodiment is not limited thereto. For example, the printer 200 may be made usable in a state in which the printer 200 faces right or left. By configuring the POS terminal device 1 so as to include the placement base 108 that allows the printer 200 to be placed thereon in a plurality of orientations and the noncontact power-feeding coil 112 and the noncontact power-receiving coil 212 that face each other in any orientation, usability can be enhanced.

Moreover, in the above-described embodiment, the description deals with noncontact power feeding as an example, but an embodiment is not limited thereto. For example, terminals that make contact with each other may be provided in the positions of the noncontact power-feeding coil 112 and the noncontact power-receiving coil 212 in the above-described embodiment such that power is fed via the terminals.

Furthermore, the POS terminal device 1 of the above-described embodiment has a structure in which the printer 200 is exposed, but an embodiment is not limited to this structure. For instance, the placement base 108 may be provided in the housing 101 of the main body unit 100. That is, the main body unit 100 may have the printer 200 incorporated therein.

In addition, the above-described embodiment deals with the POS terminal device 1 which is the information processing device provided with the printer 200 as a peripheral device. However, the embodiment may be carried out by using any peripheral device other than the printer. Likewise, the embodiment may be applied to any information processing device other than the POS terminal device.

### (Second Embodiment)

Another example will be described. In the description of the present embodiment, components that have the same name as that described in the first embodiment (but are identified with a different character) have the same function and therefore an explanation thereof will be omitted. For example, the controller 311 has the same function as the controller 111. The relationship between the controller 411 and the controller 211 is also the same. In the present embodiment, only aspects different from the first embodiment will be described.

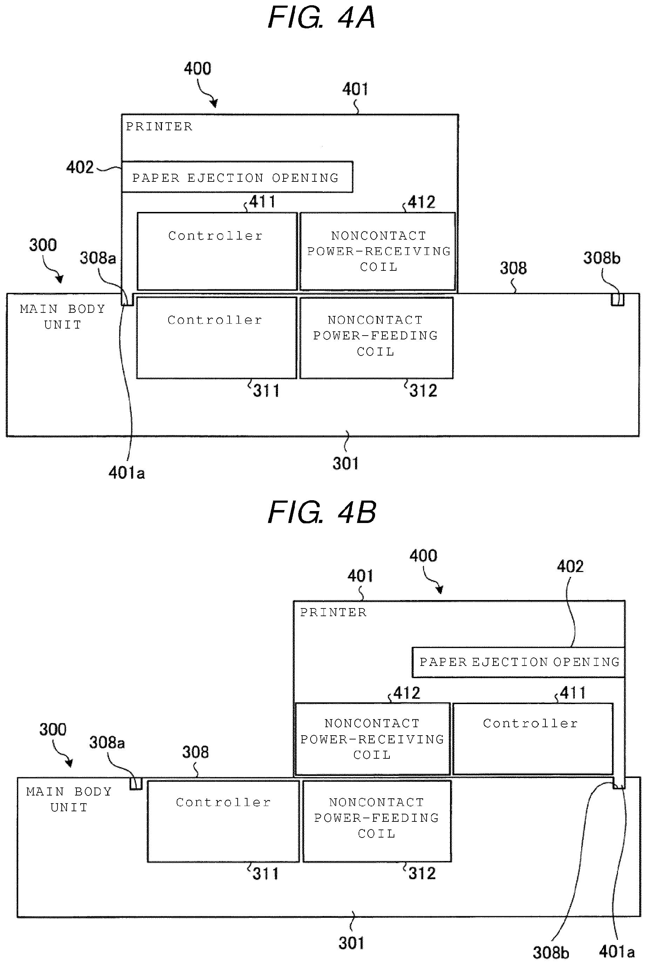

Fig. 4A is a right side view schematically depicting another example of the structure of the POS terminal device 1 in a state in which a paper ejection opening 402 of a printer 400 faces the side where the operator stands. Fig. 4B is a right side view schematically depicting the other example of the structure of the POS terminal device 1 in a state in which the paper ejection opening 402 of the printer 400 faces the side where the customer stands.

The printer 400 of the present embodiment has a shorter housing 401 compared to the printer 200 of the first embodiment. A noncontact power-receiving coil 412 is provided near the bottom surface, but not in a central part in a longitudinal direction, in the housing 401. On the other hand, as is the case with the first embodiment, a noncontact power-feeding coil 312 is provided in a central part of a placement base 308, which is provided in the top surface of a housing 301, in a longitudinal direction.

A projection 401a protrudes on the front side of the bottom face of the housing 401. Moreover, depressions 308a and 308b are provided on the front and back sides of the placement base 308. Each of the depressions 308a and 308b has a shape corresponding to the shape of the projection 401a. It is to be noted that "front" and "back" in the above description are expressions referring to the position of the operator standing in front of the POS terminal device 1.

When the projection 401a fits into the depression 308a, the printer 400 is positioned in a state in which the paper ejection opening 402 is directed toward the front side of the POS terminal device 1. Moreover, when the projection 401a fits into the depression 308b, the printer 400 is positioned in a state in which the paper ejection opening 402 is directed toward the back side of the POS terminal device 1. The match between the depression 308a or 308b and the projection 401a functions as a positioning structure that defines the position of the printer 400.

Moreover, each of the depression 308a and the depression 308b is provided in a position where the projection 401a fits thereinto in a state in which the noncontact power-receiving coil 412 is located in close proximity with and above the noncontact power-feeding coil 312.

With such a structure, even when the noncontact power-receiving coil 412 is not located in a central part of the printer 400, the printer 400 can be easily placed such that the position of the noncontact power-receiving coil 412 coincides with the position of the noncontact power-feeding coil 312. As a result, since the noncontact power-receiving coil 412 is positioned in close proximity to the noncontact power-feeding coil 312, power can be fed to the printer 400 from a main body unit 300.

According to the embodiments described above, in the information processing device (e.g., the POS terminal device 1) including the main processing device (e.g., the main body unit 100 or 300) and the peripheral device (e.g., the printer 200 or 400), usability can be enhanced by having flexibility in the position of the peripheral device with respect to the main processing device.

While certain embodiments ha<ve been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. An information processing device comprising:
a main processing device including a placement base and a power feeding unit; and
a peripheral device in communication with the main device and shaped to be mounted on the placement base in a plurality of orientations, the peripheral device including a power receiving unit configured to receive power from the power feeding unit when the peripheral device is mounted on the placement base in each of the plurality of orientations.

2. The information processing device according to claim 1, wherein the power feeding unit feeds power to the power receiving unit in a noncontact manner when the peripheral device is mounted on the placement base in each of the plurality of orientations.

3. The information processing device according to claim 1 or 2, wherein the main processing device functions as a sales data processing device in cooperation with the peripheral device.

4. The information processing device according to claim 3, wherein the peripheral device is a printer that prints a receipt.

5. The information processing device according to claim 4, wherein:
the printer includes a paper ejection opening through which the receipt is ejected, and
the plurality of orientations include a first orientation in which the paper ejection opening faces an operator of the sales data processing device and a second orientation in which the paper ejection opening faces a customer on a side of the sales data processing device opposite the operator.

6. The information processing device according to any one of claims 1 to 5, wherein the power receiving unit is centrally positioned, with respect to a longitudinal direction, in the peripheral device.

7. The information processing device according to claim 6, wherein:
the peripheral device includes a projection on a bottom surface thereof, and
the main processing device includes a plurality of depressions, each being shaped to receive the projection to position the peripheral device in one of the plurality of orientations when the peripheral device is mounted on the placement base.

8. The information processing device according to any one of claims 1 to 7, wherein the plurality of orientations includes a first orientation in which a front surface of the peripheral device faces an operator of the main processing device and a second orientation in which the front surface faces a customer on a side of the sales data processing device opposite the operator.

9. The information processing device according to any one of claims 1 to 8, wherein
the printer is controlled by the sales data processing device to print a receipt, t.

10. The information processing device according to any one of claims 1 to 9, wherein:
the sales data processing device further comprises a power feeding unit, and
the printer includes a power receiving unit configured to receive power from the power feeding unit when the peripheral device is mounted on the placement base in each of the plurality of orientations.

11. The information processing device according to claim 10, wherein the power feeding unit feeds power to the power receiving unit in a noncontact manner when the printer is mounted on the placement base in each of the plurality of orientations.

12. The information processing device according to any one of claims 5 to 11, wherein the plurality of orientations includes a third orientation in which the paper ejection opening faces to the right of an operator of the sales data processing device.

13. The information processing device according to any one of claims 5 to 11, wherein the plurality of orientations includes a third orientation in which the paper ejection opening faces to the left of an operator of the sales data processing device.

14. The information processing device according to any one of claims 6 to 13, wherein each of shapes of the placement base and a bottom surface of the peripheral device is symmetric with respect to a direction perpendicular to the longitudinal direction in the peripheral device.
